# FASCICULE DE BREVET EUROPEEN

(11) **EP 3 237 772 B1**
(45) Date de publication et mention de la délivrance du brevet: **05.02.2020**
(21) Numéro de dépôt: 15828358.0
(22) Date de dépôt: 22.12.2015
(51) Int. Cl.: F16D 7/10, F16D 43/208

(54) **VOLET AERODYNAMIQUE RETRACTABLE DE VEHICULE AUTOMOBILE**
EINZIEHBARE AERODYNAMISCHE KLAPPE EINES KRAFTFAHRZEUGS
RETRACTABLE AERODYNAMIC FLAP OF A MOTOR VEHICLE

(30) Priorité: 26.12.2014 FR 1463348
(43) Date de publication de la demande: 01.11.2017
(73) Titulaire: Compagnie Plastic Omnium, 69007 Lyon (FR)
(72) Inventeur: ANDRE, Gérald, 01500 Saint-Denis-en-Bugey (FR); MAZUE, Bertrand, Lyon (FR); HOLLEVILLE, Francis, St Remy les Chevreuse (FR)
(74) Mandataire: Andrieux, Benoît
(86) Numéro de dépôt international: PCT/FR2015/053708
(87) Numéro de publication internationale: WO 2016/102881

(56) Documents cités:
- WO-A1-2009/148201
- DE-A1-102008 002 591
- DE-U1-202007 014 560
- US-A1- 2006 111 192

## Description

La présente invention concerne le domaine des véhicules automobiles. En particulier, l'invention concerne un organe de débrayage voir US2006/111192, DE202007014560, DE102008002591 et WO2009/148201 comme état de la technique lié à ces organes de débrayage pour le désengagement d'une liaison entre un moyen moteur et un arbre, pour un véhicule qui comprend au moins un volet aérodynamique rétractable.

Des véhicules comportant des éléments mobiles intégrés sous le bouclier avant du véhicule sont décrits par exemple dans les brevets français FR2821593, FR2927303 et FR2864811.

De tels volets rétractables sont destinés à améliorer l'aérodynamique du véhicule, par exemple en réduisant la traînée du véhicule, et sa consommation, notamment à partir de vitesse supérieures à 70km/h. Ces volets peuvent être placés à divers endroits de la carrosserie : face avant, faces latérales et/ou face arrière.

Lorsque les volets sont en position repliée (escamotée) sous le bouclier avant, ceux-ci sont protégés à l'égard des chocs contre des obstacles tels que les bords de trottoir. Cette position repliée sous le bouclier convient par conséquent pour la circulation à faible vitesse dans les villes ou sur des routes présentant des défauts de surface ou un revêtement en pierre par exemple.

De tels volets sont particulièrement utiles sur des véhicules ayant une importante garde au sol tels que les 4 X 4, SUV et monospaces. Ces véhicules, en effet, consomment plus de carburant, notamment du fait d'une garde au sol impliquant de fortes pertes aérodynamiques.

Ces volets aérodynamiques rétractables peuvent simplement être montés sur un arbre et entraînés en rotation sur cet arbre par un moteur.

En situation de roulage, c'est-à-dire lorsque le véhicule fonctionne, il arrive que de tels volets se retrouvent en situation de blocage du mécanisme de rotation, du fait de la présence de boue, de neige, de glace ou de corps étrangers par exemple, ou encore du fait d'une charge aérodynamique trop élevée. Cela implique alors des risques d'endommagement pour le moteur. En effet, le moteur ne doit pas forcer pour mettre le volet en position repliée, lorsque le véhicule ralentit ou s'arrête, alors que celui-ci est bloqué. De même, si le mécanisme s'encrasse à l'arrêt, le moteur ne doit pas forcer pour mettre le volet en position dépliée, lorsque le véhicule roule à vitesse élevée.

Par ailleurs, il est parfois nécessaire de réaliser des opérations de maintenance du volet lorsque le véhicule est à l'arrêt, donc sans commande électrique. En effet, l'usager peut avoir besoin d'ouvrir ou de fermer le volet suite à un blocage, afin de le nettoyer, ou de débloquer des éléments retenus par le volet (branche, feuilles...). Il apparait donc nécessaire de pouvoir actionner la rotation du volet, vers une position ouverte ou vers une position rétractée, indépendamment du contrôle électrique ou électronique commandant le moteur.

On connaît des solutions pour éviter un endommagement du mécanisme d'actionnement, sous l'effort excessif appliqué sur le volet ou devant être appliqué au volet par le moteur, telles qu'un déclipsage de la pièce rétractable, ou encore une déformation utilisant la souplesse de la pièce.

Mais, aucune solution n'est vraiment adaptée à protéger un système rétractable et rigide de grande dimension, ainsi qu'à répondre au besoin de maintenance du volet en position fermé.

Le but de la présente invention est d'apporter des perfectionnements aux volets rétractables permettant d'éviter un endommagement du mécanisme d'actionnement de volet, et permettant une maintenance du volet à l'arrêt du véhicule.

Ce but est atteint grâce à l'invention tel que décrite dans les revendications.

Cette invention permet de protéger le moteur en toutes circonstances, même hors tension.

L'invention sera mieux comprise à la lecture des figures annexées, qui sont fournies à titre d'exemples et ne présentent aucun caractère limitatif, dans lesquelles :
- La figure 1 illustre une moitié et l'axe de symétrie d'un système aérodynamique rétractable pour véhicule automobile, comprenant un moyen moteur, un arbre entrainé en rotation par le moyen moteur et portant le volet rétractable, et un organe de débrayage selon l'invention.
- La figure 2 illustre un exemple d'organe de débrayage selon l'invention.
- La figure 3 illustre en détail un premier élément de l'organe de débrayage.
- La figure 4 illustre en détail un second élément de l'organe de débrayage.
- La figure 5 illustre un mode de réalisation dans lequel le moyen élastique intègre à son extrémité une forme permettant d'assurer la fonction de l'organe d'engagement.
- La figure 6 illustre un mode de réalisation dans lequel l'organe d'engagement et le moyen élastique est une partie moulée, issue de matière avec le second élément.
- La figure 7 illustre un mode de réalisation particulier où le moyen élastique est un ressort de type fil.

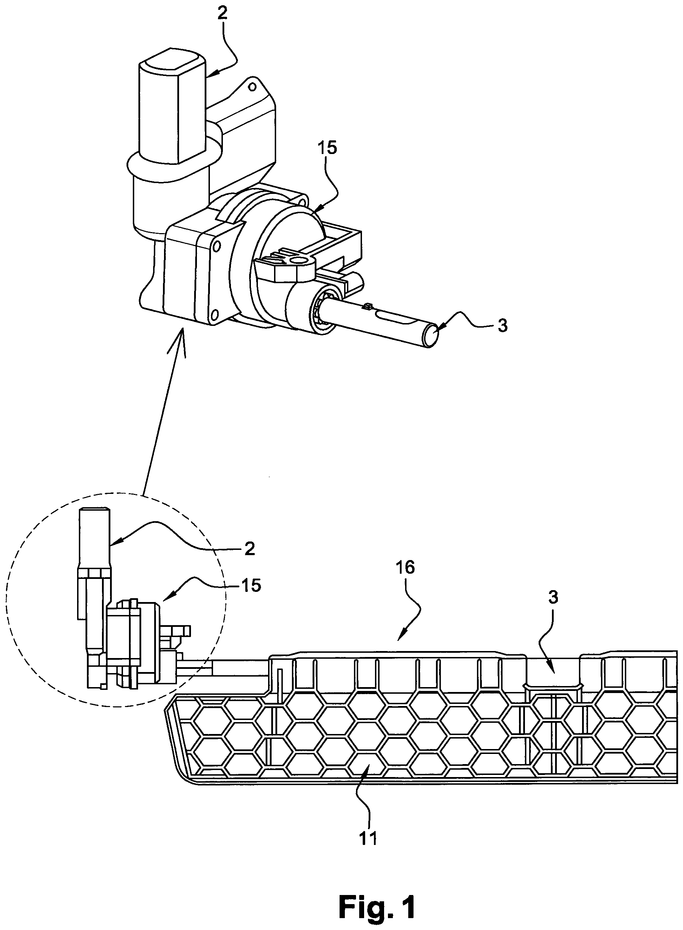

La figure 1 illustre un système aérodynamique rétractable pour véhicule automobile, comprenant un organe de débrayage (1) selon l'invention (dans l'élément 15 sur la figure 1), un moyen moteur (2), et un arbre (3) entrainé en rotation par le moyen moteur (2) et portant le volet rétractable (11).

Comme l'illustre la figure 1, l'organe de débrayage (1) selon l'invention est particulièrement adapté à être monté sur un véhicule automobile dont le bouclier avant comprend au moins un volet aérodynamique rétractable, monté pivotant entre une position repliée sous le bouclier avant et une position dépliée dans laquelle le déflecteur fait saillie vers le bas.

Ainsi, l'invention sera décrite selon cet exemple particulier de réalisation, dans lequel le volet mobile est rétractable et pivotant, et monté sur un bouclier avant de véhicule automobile.

L'organe de débrayage (1) selon l'invention permet le désengagement d'une liaison entre un moyen moteur (2) et un arbre (3) entrainé en rotation sur lui-même par le moyen moteur (2).

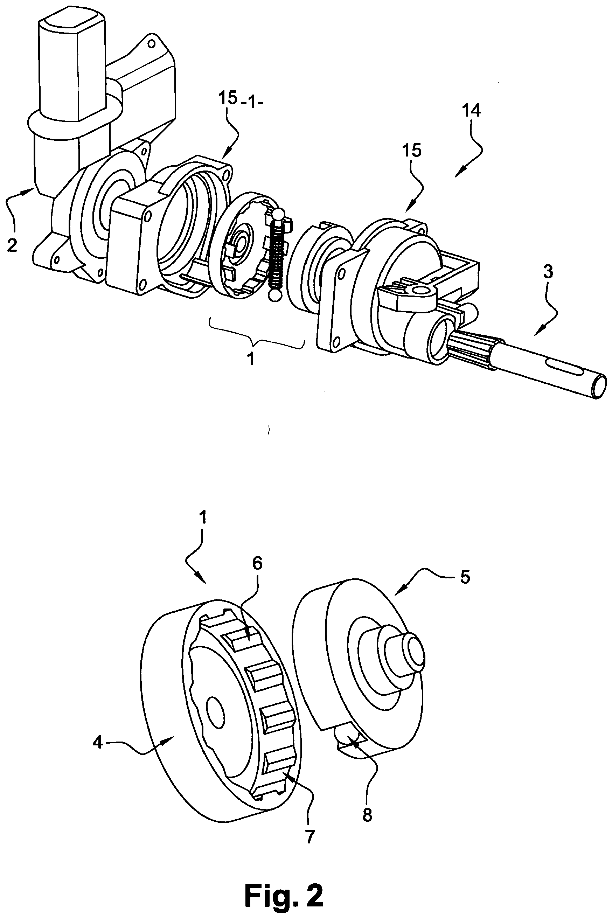

On se réfère maintenant à la figure 2 qui illustre un exemple particulier de réalisation de l'organe de débrayage (1) selon l'invention.

L'organe de débrayage (1) comporte un premier (4) et un second (5) éléments, l'un étant apte à être relié au moyen moteur (2) par une liaison lui permettant d'être mis en rotation par le moyen moteur (2), et l'autre élément étant apte à être fixé sur l'arbre (3). L'élément (4,) pouvant avoir la forme de cloches comme l'illustre la figure 2.

Le premier et le second éléments (4 et 5) sont aptes à s'emboîter l'un dans l'autre selon une direction sensiblement parallèle à l'arbre (3). Selon l'exemple particulier de réalisation illustré, c'est le second élément (5) qui est apte à s'emboiter dans le premier élément (4) comme l'illustre la figure 2, et c'est le premier élément (4) qui est en liaison avec le moteur.

Les deux éléments (4, 5) sont rendus solidaires en rotation, jusqu'à un certain niveau de couple, par une liaison radiale débrayable, décrite ci-après.

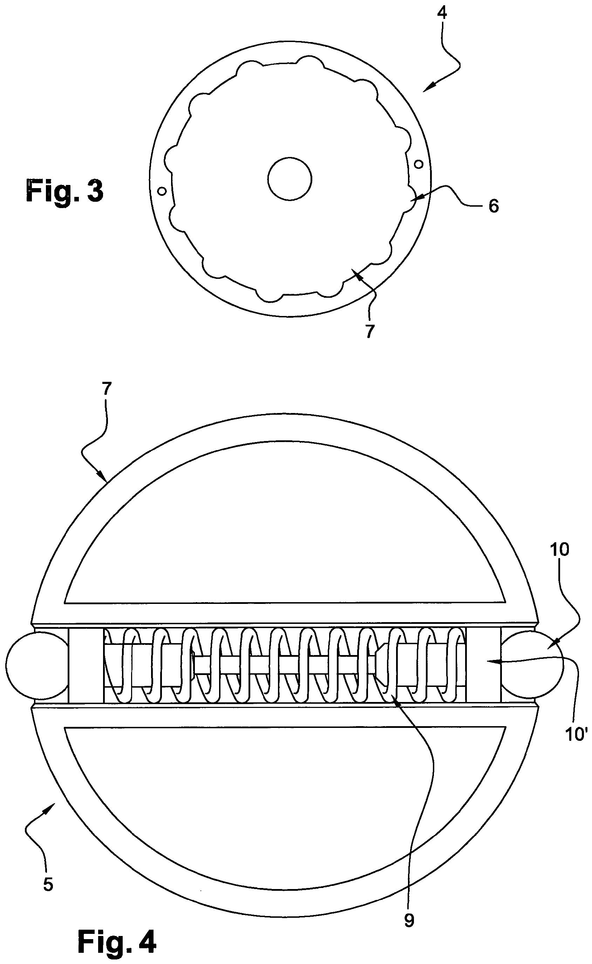

La figure 3 représente une vue du premier élément (4). Ce premier élément (4) comporte au moins un évidement (6) à l'interface d'emboitement (7) entre les deux éléments (4, 5). L'interface d'emboîtement représente les surfaces cylindriques en vis à vis entre les deux éléments (4, 5) une fois emboîtés : le flanc externe du second élément (5) (par exemple une surface cylindrique) et le flanc interne du premier élément (4).

La figure 4 représente une vue du second élément (5). Ce second élément (5) comporte au moins un axe (8) muni d'au moins un moyen élastique (9). Ce moyen élastique (9) exerce un effort radial sur l'interface d'emboitement (7) par l'intermédiaire d'un organe d'engagement (10). Ainsi, on appelle axe (8) soit le moyen élastique (9) seul, soit le moyen élastique (9) et l'organe d'engagement (10).

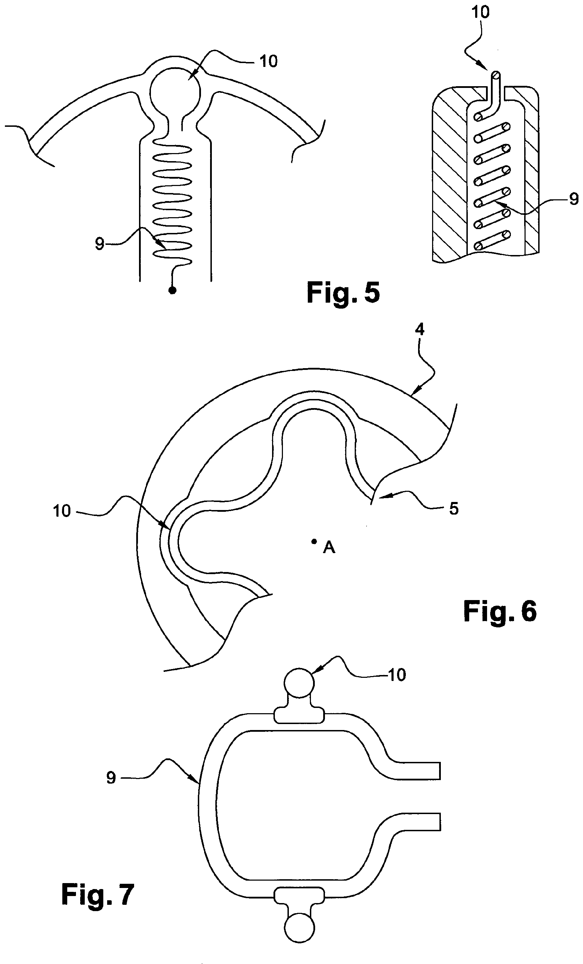

L'organe d'engagement (10) peut être un élément rapporté au moyen élastique (9) ou être une partie du moyen élastique (9), comme par exemple la terminaison d'un ressort. Par exemple, selon un mode de réalisation illustré sur la figure 5, le moyen élastique (9) intègre à son extrémité une forme permettant d'assurer la fonction de l'organe d'engagement. Sur l'exemple illustré sur la figure 5, le moyen élastique (9) est un fil formant un ressort de compression et formant à l'une de ses extrémités une boucle dont l'arc supérieur assure la fonction d'organe d'engagement. Dans une variante de réalisation, notamment pour améliorer le guidage radial de la forme d'engagement, l'organe d'engagement (10) peut être intégré par surmoulage thermoplastique du moyen élastique (9).

Selon un mode de réalisation (figure 6), l'organe d'engagement (10) est une partie moulée, issue de matière avec le second élément (5). Cet organe d'engagement (10) est alors une surface d'engagement, cylindrique ou sphérique, se situant sur l'interface d'emboîtement du second élément (5). Le moyen élastique (9) est, selon ce mode de réalisation, une zone en périphérie de chaque surface d'engagement, présentant une souplesse en compression telle que la surface d'engagement est apte à se déplacer radialement en direction de son centre A sous l'effet d'un couple prédéfini, et ce déplacement se produit dans des conditions élastiques, c'est-à-dire sans plastification de l'élément (5). Ainsi, selon ce mode de réalisation, l'élément élastique (9) est en plastique et est intégré par moulage au second élément (5), et l'effort élastique est exercé par déformation de ce second élément (5).

L'organe d'engagement (10) peut être composé d'un élément apte à se loger dans l'évidement (6) et d'un poussoir (10') comme l'illustre la figure 4.

Sur l'exemple de la figure 4, la surface du second élément (5) formant l'interface d'emboitement (7) peut ainsi comporter des orifices aptes à laisser passer l'organe d'engagement (10), afin qu'il puisse venir en contact avec la surface du premier élément (4) formant l'interface d'emboitement (7). Sur cet exemple encore, l'axe (8) est logé dans une gouttière radiale du second élément (5). Sur cet exemple encore, l'axe (8) est positionné diamétralement au sein de l'élément (5).

Cet organe d'engagement (10) est apte à venir s'engager dans l'évidement (6), maintenant solidaire en rotation les deux éléments (4, 5) jusqu'à un couple prédéfini de transmission entre l'axe (8), via l'organe d'engagement (10), et le premier élément (4).

Le moyen élastique (9) est lui configuré pour qu'au-delà de ce couple prédéfini de transmission entre l'organe d'engagement (10) et le premier élément (4), l'organe d'engagement (10) comprime suffisamment le moyen élastique (9) pour pouvoir sortir de l'évidement (6). Une fois sorti de l'évidement (6), le second élément (5) peut alors tourner sans entraîner le premier élément (4), permettant ainsi une rotation du volet sans rotation du moteur, ou inversement.

Pour un volet aérodynamique (11) de face avant de véhicule automobile, ce couple prédéfini peut être compris entre 5 Nm et 20 Nm dans un sens et dans l'autre.

Le moyen élastique (9) peut être un ressort, de type compression (figures 4, 5) ou de type fil (figure 7) par exemple, ou une lame élastique emboutie ou encore un ensemble de ressort, ou une partie moulée (figure 6).

Selon le mode de réalisation de la figure 4, l'axe (8) comporte un organe d'engagement (10) à chacune de ses extrémités.

Selon un mode de réalisation préféré, le premier élément (4) comporte plusieurs évidements (6) sur son pourtour (interface d'emboitement). Lorsque l'on exerce le couple prédéfini de transmission entre l'organe d'engagement (10) et le premier élément (4), l'organe d'engagement (10) comprime le moyen élastique (9) et sort alors de l'évidement (6) dans lequel il était engagé. Le second élément (5) peut alors tourner sur lui-même sans entraîner le premier élément (4). En poursuivant la rotation du second élément (5), et/ou de l'axe (8), l'organe d'engagement (10) est alors apte à s'engager dans un évidement (6) voisin de celui duquel il est sorti, sur le pourtour du premier élément (4) après un angle de rotation prédéfini.

On peut ainsi pousser cran par cran le volet aérodynamique (11) pour le fermer, et le rouvrir cran par cran (d'un évidement à un autre).

Pour un volet aérodynamique (13) de face avant de véhicule automobile, dont la rotation est proche de 90°, l'angle de rotation prédéfini entre deux crans successifs et idéal à l'usage, pourra être compris sensiblement entre 10° et 30°.

De préférence, les évidements (6) sont répartis régulièrement sur le pourtour de la surface d'emboitement.

Pour faciliter l'engagement et le désengagement de l'organe d'engagement (10) dans un évidement (6), on choisit des formes adaptées, et des matériaux à faible frottement relatif (polyamide chargé de bisulfure de molybdène, POM, graisses, contact acier/plastique...). Par exemple, de façon avantageuse, l'organe d'engagement (10) peut être sphérique, par exemple une bille, et l'évidement (6) peut alors avoir une forme complémentaire telle qu'un demi-cylindre comme l'illustrent les figures 2, 3 et 4. Le demi-cylindre a l'avantage de faciliter l'emboîtement des deux éléments (4, 5). En variante, l'évidement (6) pourra avoir une forme en V, en U.

De façon avantageuse, notamment pour des véhicules pour lesquels les efforts aérodynamiques sont importants (que ce soit du fait d'une grande surface de volet ou du fait d'une vitesse maximum élevée), un évidement (6) comporte une pente (pour une forme en V notamment) ou un rayon de courbure (pour une forme cylindrique) de désengagement de l'organe différente de la pente d'engagement.

On appelle pente (ou rayon de courbure) d'engagement, la pente (ou le rayon de courbure) vue par l'organe d'engagement (10) lorsqu'il pénètre dans l'évidement (6) suite à une rotation dans un sens donné du second élément (5). La pente (ou rayon de courbure) de désengagement est, à l'inverse, la pente (ou le rayon de courbure) vue par l'organe d'engagement (10) lorsqu'il sort de l'évidement (6) suite à une rotation dans le même sens du second élément (5).

Ainsi, lorsque le second élément (5) tourne dans un sens opposé, la pente (ou rayon de courbure) d'engagement devient la pente (ou rayon de courbure) de désengagement, et vice et versa.

Un tel évidement (6) dissymétrique permet par exemple une ouverture manuelle facilitée par rapport à l'effort de fermeture forcée, qui doit nécessairement être supérieure à l'effort aérodynamique.

Dans ce cas, pour le sens de rotation du volet aérodynamique (11) correspondant à son ouverture, l'évidement (6) comporte une pente de désengagement de l'organe d'engagement (10) plus faible que la pente d'engagement.

Selon un mode de réalisation, l'organe de débrayage (1) comporte une poignée apte à comprimer le moyen élastique (9) par une action manuelle, via une fourchette 11 (non représentée), de façon à simplifier le montage et à réduire les efforts nécessaires au désengagement de l'organe d'engagement (10). Ce mode est notamment avantageux dans le cas de volets subissant des efforts élevés au roulage.

De façon préférentielle, les deux éléments sont fabriqués par injection de matière thermoplastique. Le premier élément (4) peut alors être réalisé à l'aide d'un moule dont l'extraction se fera dans le sens de l'axe (8) de révolution de cet élément (les évidements (6) seront alors cylindrique à la dépouille de démoulage prêt), les évidements (6) présentant de préférence une section en demi-cercle, de telles sorte que l'évidement (6) soit démoulé naturellement.

Selon un autre mode de réalisation, le second élément (5) comporte plusieurs axes (8), et le premier élément (4) comporte au moins autant d'évidements (6) sur son pourtour.

L'invention concerne également un ensemble (14), illustré sur la figure 2, d'un moyen moteur (2), d'un arbre (3) entrainé en rotation par ce moyen moteur (2), et d'un organe de débrayage (1) selon l'invention. Dans cet ensemble, le premier élément (4) est relié au moyen moteur (2) par une liaison lui permettant d'être mis en rotation par le moyen moteur (2), et le second élément (5) est fixé sur l'arbre (3). L'axe (8) est de préférence sensiblement perpendiculaire à l'arbre (3).

Selon un mode de réalisation, l'ensemble comporte également un réducteur (15), par exemple constitué de deux pignons de tailles différentes, entre le moyen moteur (2) et l'arbre (3).

L'organe de débrayage (1) peut alors être positionné, non seulement entre le moyen moteur (3) et le réducteur (15), ou entre le réducteur (15) et l'arbre (3), mais également au sein même du réducteur (15).

L'invention concerne également un système aérodynamique rétractable (16), illustré sur la figure 1, pour face avant de véhicule automobile, comportant un ensemble (13) selon l'invention, et un volet aérodynamique (11) fixé sur l'arbre (3).

Le volet aérodynamique (11) est rétractable, monté pivotant entre une position repliée sous le bouclier avant du véhicule et une position dans laquelle le déflecteur fait saillie vers le bas.

Selon une configuration, le volet aérodynamique (11) est apte à pivoter d'un angle proche de 90°. Dans ce cas, l'angle de réenclenchement après débrayage prédéfini est de préférence compris sensiblement entre 10° et 30°

Selon un exemple de réalisation, le couple prédéfini, pour permettre le désengagement de l'organe d'engagement (10), est compris entre 5 Nm et 20 Nm.

Enfin, selon un mode de réalisation préféré du système aérodynamique rétractable, pour le sens de rotation du volet aérodynamique (11) correspondant à son ouverture, l'évidement (6) comporte une pente de désengagement de l'organe d'engagement (10) plus faible que la pente d'engagement. La pente d'engagement sera préférablement comprise entre 50 et 80° afin d'avoir un moyen élastique (9) d'une rigidité plus faible.

On a décrit l'invention dans le cadre d'une maintenance, c'est-à-dire lorsque le véhicule est à l'arrêt et que l'on souhaite manuellement le changer de position (repliée ou dépliée). Mais l'invention s'applique également au cas où le véhicule est en situation de roulage, et que le moteur force pour changer la position du volet. Dans ce cas, le débrayage protège le moteur d'une surcharge

De plus, l'organe de débrayage selon l'invention s'applique à tout type de système mobile motorisé sur un véhicule, qu'il soit rétractable ou non, qu'il soit pivotant ou non.

Enfin, l'invention a été décrite selon un exemple où le second élément (5) portant le moyen élastique (9) et l'organe d'engagement (10) est fixé à l'arbre (3). Bien entendu, le second élément (5) peut être fixé au moyen moteur, alors que le premier élément (4) est fixé à l'arbre (3).

## Revendications

1. Système aérodynamique rétractable (16) pour véhicule automobile, comprenant un ensemble (14) d'un moyen moteur (2), d'un arbre (3) entrainé en rotation par ledit moyen moteur (2) et d'un organe de débrayage (1) pour le désengagement d'une liaison entre le moyen moteur (2) et l'arbre (3), ainsi qu'un volet aérodynamique (11) fixé sur l'arbre (3), l'organe de débrayage (1), comportant un premier et un second éléments (4 et 5) aptes à s'emboîter l'un dans l'autre selon une direction sensiblement parallèle à l'arbre (3), l'un étant apte à être relié au moyen moteur (2) par une liaison lui permettant d'être mis en rotation par le moyen moteur (2), et l'autre élément étant apte à être fixé sur l'arbre (3), **caractérisé en ce que** :
- le premier élément (4) comporte au moins un évidement (6) à l'interface d'emboitement (7) entre les deux éléments ;
- le second élément (5) comporte au moins un moyen élastique (9) exerçant un effort radial sur l'interface d'emboitement (7) par l'intermédiaire d'un organe d'engagement (10) apte à venir s'engager dans l'évidement (6), maintenant solidaire en rotation les deux éléments jusqu'à un couple prédéfini de transmission entre l'organe d'engagement (10) et le premier élément (4) ;
- le moyen élastique (9), l'évidement (6) et l'organe d'engagement (10) étant configurés pour qu'au-delà de ce couple prédéfini, l'organe d'engagement (10) comprime le moyen élastique (9) et sort de l'évidement (6), dans lequel, pour le sens de rotation du volet aérodynamique (11) correspondant à son ouverture, l'évidement (6) comporte une pente de désengagement de l'organe d'engagement (10) plus faible que la pente d'engagement..

2. Système (16) selon l'une des revendications précédentes, dans lequel le couple prédéfini est compris entre 5 Nm et 20 Nm.

3. Système (16) selon l'une des revendications précédentes, dans lequel le moyen élastique (9) est un ressort.

4. Système (16) selon l'une des revendications précédentes, comportant un axe (8) muni d'un organe d'engagement (10) à chacune de ses extrémités.

5. Système (16) selon l'une des revendications précédentes, dans lequel le premier élément (4) comporte plusieurs évidements (6) sur l'interface d'emboitement (7).

6. Système (16) selon la revendication 5, dans lequel l'organe d'engagement (10) est apte à s'engager dans un évidement (6) voisin sur le pourtour du premier élément (4) après un angle de rotation prédéfini.

7. Système (16) selon la revendication 6, dans lequel l'angle de rotation prédéfini est compris sensiblement entre 10° et 30°.

8. Système (16) selon l'une des revendications précédentes, dans lequel l'organe d'engagement (10) est cylindrique ou sphérique, et l'évidement (6) a une forme complémentaire telle qu'un demi-cylindre.

9. Système (16) selon l'une des revendications précédentes, dans lequel l'organe d'engagement (10) est une bille ou une forme en V.

10. Système (16) selon l'une des revendications précédentes, dans lequel l'évidement (6) comporte une pente ou un rayon de courbure de désengagement de l'organe (10), différente de la pente ou du rayon de courbure d'engagement de l'organe (10).

11. Système (16) selon l'une des revendications précédentes, comportant une poignée apte à comprimer le moyen élastique (9), de façon à réduire les efforts nécessaires au désengagement de l'organe d'engagement (10).

12. Système (16) selon l'une des revendications précédentes, dans lequel les deux éléments sont en matière thermoplastique.

13. Système (16) selon l'une des revendications précédentes, dans lequel une extrémité du moyen élastique (9) forme l'organe d'engagement (10), ou l'organe d'engagement (10) est rapporté au moyen élastique (9) par surmoulage thermoplastique.

14. Système (16) selon l'une des revendications précédentes, dans lequel l'organe d'engagement (10) est une partie moulée du second élément (5), située sur l'interface d'emboîtement du second élément (5), et le moyen élastique (9) est une zone en périphérie de l'organe d'engagement (10) présentant une souplesse en compression telle que l'organe d'engagement (10) est apte à se déplacer radialement.

15. Système (16) selon l'une des revendications précédentes , dans lequel le premier élément (4) est relié au moyen moteur (2) par une liaison lui permettant d'être mis en rotation par le moyen moteur (2), et le second élément (5) est fixé sur l'arbre (3).

16. Système (16) selon l'une des revendications précédentes, dans lequel l'organe de débrayage (1) comporte un axe (8) muni d'un organe d'engagement(10) à chacune de ses extrémités, l'axe (8) étant sensiblement perpendiculaire à l'arbre (3).

17. Système (16) selon l'une des revendications précédentes7, comprenant un réducteur (15).

18. Système (16) selon l'une des revendications précédentes, dans lequel le volet aérodynamique (11) est apte à pivoter d'un angle proche de 90°, et dans lequel l'organe d'engagement (10) est apte à s'engager dans un évidement (6) voisin sur le pourtour du premier élément (4) après un angle de rotation prédéfini compris sensiblement entre 10° et 30°.

19. Système (16) selon l'une des revendications précédentes, dans lequel le couple prédéfini est compris entre 5 Nm à 10 Nm.

## Patentansprüche

1. Einziehbares aerodynamisches System (16) für Kraftfahrzeug, umfassend eine Anordnung (14) aus einem ersten Motormittel (2), aus einer Welle (3), die von dem Motormittel (2) zur Drehung angetrieben wird, und aus einem Entkupplungsorgan (1) zum Lösen einer Verbindung zwischen dem Motormittel (2) und der Welle (3), sowie eine aerodynamische Klappe (11), die an der Welle (3) befestigt ist, wobei das Entkupplungsorgan (1) ein erstes und ein zweites Element (4 und 5) aufweist, die imstande sind, in einer Richtung im Wesentlichen parallel zu der Welle (3) ineinander gesteckt zu werden, wobei das eine imstande ist, mit dem Motormittel (2) durch eine Verbindung verbunden werden zu können, die ihm gestattet, von dem Motormittel (2) zur Drehung angetrieben zu werden, und wobei das andere imstande ist, an der Welle (3) befestigt zu werden, **dadurch gekennzeichnet, dass**:
- das erste Element (4) wenigstens eine Ausnehmung (6) an der Einsteckschnittstelle (7) zwischen den zwei Elementen aufweist;
- das zweite Element (5) wenigstens ein elastisches Mittel (9) aufweist, das eine radiale Kraft auf die Einsteckschnittstelle (7) mittels eines Eingriffsorgans (10) ausübt, das imstande ist, in der Ausnehmung (6) in Eingriff zu kommen, und die zwei Elemente bis zu einem vordefinierten Antriebsmoment zwischen dem Eingriffsorgan (10) und dem ersten Element (4) drehfest verbunden hält;
- wobei das elastische Mittel (4), die Ausnehmung (6) und das Eingriffsorgan (10) so ausgebildet sind, dass jenseits des vordefinierten Antriebsmoments das Eingriffsorgan (10) das elastische Mittel (9) zusammendrückt und aus der Ausnehmung (6) austritt,
wobei, für die Drehrichtung der aerodynamischen Klappe (11), die ihrer Öffnung entspricht, die Ausnehmung (6) eine Steigung zum Lösen des Eingriffsorgans (10) aufweist, die geringer ist als die Steigung zum Eingreifen.

2. System (16) nach einem der vorhergehenden Ansprüche, wobei das vordefinierte Moment zwischen 5 Nm und 20 Nm beträgt.

3. System (16) nach einem der vorhergehenden Ansprüche, wobei das elastische Mittel (9) eine Feder ist.

4. System (16) nach einem der vorhergehenden Ansprüche, aufweisend einen Bolzen (8), der an jedem seiner Enden mit einem Eingriffsorgan (10) versehen ist.

5. System (16) nach einem der vorhergehenden Ansprüche, wobei das erste Element (4) mehrere Ausnehmungen (6) an der Einsteckschnittstelle (7) aufweist.

6. System (16) nach Anspruch 5, wobei das Eingriffsorgan (10) imstande ist, in einer benachbarten Ausnehmung (6) an dem Umfang des ersten Elements (4) nach einem vordefinierten Drehwinkel in Eingriff zu kommen.

7. System (16) nach Anspruch 6, wobei der vordefinierte Drehwinkel im Wesentlichen zwischen 10° und 30° beträgt.

8. System (16) nach einem der vorhergehenden Ansprüche, wobei das Eingriffsorgan (10) zylindrisch oder kugelförmig ist und die Ausnehmung (6) eine komplementäre Form wie einen Halbzylinder aufweist.

9. System (16) nach einem der vorhergehenden Ansprüche, wobei das Eingriffsorgan (10) eine Kugel oder eine V-Form ist.

10. System (16) nach einem der vorhergehenden Ansprüche, wobei die Ausnehmung (6) eine Steigung oder einen Krümmungsradius zum Lösen des Eingriffsorgans (10) aufweist, der von der Steigung oder dem Krümmungsradius zum Eingreifen des Organs ist verschieden.

11. System (16) nach einem der vorhergehenden Ansprüche, aufweisend ein Griffelement, das imstande ist, das elastische Mittel (9) zusammenzudrücken, so dass die Kräfte, die für das Lösen des Eingriffsorgans (10) notwendig sind, reduziert werden.

12. System (16) nach einem der vorhergehenden Ansprüche, wobei die zwei Elemente aus thermoplastischem Material sind.

13. System (16) nach einem der vorhergehenden Ansprüche, wobei ein Ende des elastischen Mittels (9) das Eingriffsorgan (10) bildet oder das Eingriffsorgan (10) an dem elastischen Mittel (9) durch thermoplastisches Aufformen angebracht ist.

14. System (16) nach einem der vorhergehenden Ansprüche, wobei das Eingriffsorgan (10) ein gegossener Teil des zweiten Elements (5) ist, der sich an der Einsteckschnittstelle des zweiten Elements (5) befindet, und das elastische Mittel (9) eine Zone am Rand des Eingriffsorgans (10) ist, die eine derartige Flexibilität beim Zusammendrücken aufweist, dass das Eingriffsorgan (10) imstande ist, sich radial zu bewegen.

15. System (16) nach einem der vorhergehenden Ansprüche, wobei das erste Element (4) mit dem Motormittel (2) durch eine Verbindung verbunden ist, die ihm gestattet, von dem Motormittel (2) zur Drehung angetrieben zu werden, und das zweite Element (5) an der Welle (3) befestigt ist.

16. System (16) nach einem der vorhergehenden Ansprüche, wobei das Entkupplungsmittel (1) einen Bolzen (8) aufweist, der an jedem seiner Enden mit einem Eingriffsorgan (10) versehen ist, wobei der Bolzen (8) zu der Welle (3) im Wesentlichen senkrecht ist.

17. System nach einem der vorhergehenden Ansprüche, umfassend ein Getriebe (15).

18. System (16) nach einem der vorhergehenden Ansprüche, wobei die aerodynamische Klappe (11) imstande ist, um einen Winkel nahe 90° zu schwenken, und wobei das Eingriffsorgan (10) imstande ist, in einer benachbarten Ausnehmung (6) an dem Umfang des ersten Elements (4) nach einem vordefinierten Drehwinkel in Eingriff zu kommen, der im Wesentlichen zwischen 10° und 30° beträgt.

19. System (16) nach einem der vorhergehenden Ansprüche, wobei das vordefinierte Moment zwischen 5 Nm und 10 Nm beträgt.

## Claims

1. Retractable aerodynamic system (16) for a motor vehicle, comprising an assembly (14) of a motor means (2), a shaft (3) rotated by said motor means (2), a disengaging member (1) for releasing a link between the motor means (2) and the shaft (3) as well as an aerodynamic flap (11) attached to the shaft (3), the disengaging member (1) comprising first and second elements (4 and 5) capable of fitting together in a direction substantially parallel to the shaft (3), one being capable of being connected to the motor means (2) by a link that enables it to be rotated by the motor means (2), and the other element being capable of being attached to the shaft (3), **characterised in that**:
- the first element (4) comprises at least one recess (6) at the fitting interface (7) between the two elements;
- the second element (5) comprises at least one elastic means (9) exerting a radial force on the fitting interface (7) via an insertion member (10) capable of being inserted into the recess (6), keeping the two elements secured to one another for rotation therewith up until a predefined transmission torque between the insertion member (10) and the first element (4);
- the elastic means (9), the recess (6) and the insertion member (10) being configured so that, beyond said predefined torque, the insertion member (10) compresses the elastic means (9) and exits the recess (6), wherein for the direction of rotation of the aerodynamic flap (11) corresponding to its opening, the recess (6) comprises a slope for disengaging the insertion member (10) that is less than the insertion slope.

2. System (16) according to one of the preceding claims, wherein the predefined torque is between 5 Nm and 20 Nm.

3. System (16) according to one of the preceding claims, wherein the elastic means (9) is a spring.

4. System (16) according to one of the preceding claims, comprising an axis (8) provided with an insertion member (10) at each of its ends.

5. System (16) according to one of the preceding claims, wherein the first element (4) comprises several recesses (6) on the fitting interface (7).

6. System (16) according to claim 5, wherein the insertion member (10) is capable of being inserted in an adjacent recess (6) on the periphery of the first element (4) after a predefined angle of rotation.

7. System (16) according to claim 6, wherein the predefined angle of rotation is substantially between 10° and 30°.

8. System (16) according to one of the preceding claims, wherein the insertion member (10) is cylindrical or spherical, and the recess (6) has a complementary shape such as a half-cylinder.

9. System (16) according to one of the preceding claims, wherein the insertion member (10) is a ball or has a V shape.

10. System (16) according to one of the preceding claims, wherein the recess (6) comprises a slope or radius of curvature for disengaging the member (10), different from the slope or radius of curvature for inserting the member (10).

11. System (16) according to one of the preceding claims, comprising a handle capable of compressing the elastic means (9), so as to reduce the forces required to disengage the insertion member (10).

12. System (16) according to one of the preceding claims, wherein the two elements are made of thermoplastic material.

13. System (16) according to one of the preceding claims, wherein one end of the elastic means (9) forms the insertion member (10), or the insertion member (10) is added to the elastic means (9) by thermoplastic overmoulding.

14. System (16) according to one of the preceding claims, wherein the insertion member (10) is a moulded section of the second element (5), located on the fitting interface of the second element (5), and the elastic means (9) is an area on the periphery of the insertion member (10) having flexibility in compression such that the insertion member (10) is capable of moving radially.

15. System (16) according to one of the preceding claims, wherein the first element (4) is connected to the motor means (2) by a link that enables it to be rotated by the motor means (2), and the second element (5) is attached to the shaft (3).

16. System (16) according to one of the preceding claims, wherein the disengaging member (1) comprises an axis (8) provided with an insertion member (10) at each of its ends, the axis (8) being substantially perpendicular to the shaft (3).

17. System (16) according to one of the preceding claims, comprising a gearbox (15).

18. System (16) according to one of the preceding claims, wherein the aerodynamic flap (11) is capable of pivoting by an angle close to 90°, and wherein the insertion member (10) is capable of being inserted in an adjacent recess (6) on the periphery of the first element (4) after a predefined angle of rotation substantially between 10° and 30°.

19. System (16) according to one of the preceding claims, wherein the predefined torque is between 5 Nm and 10 Nm.
